# EUROPEAN PATENT APPLICATION

(11) **EP 4 760 194 A1**
(43) Date of publication of application: **17.06.2026**
(21) Application number: 25217066.7
(22) Date of filing: 19.11.2025
(51) Int. Cl.: F28F 9/02

(54) **STRESS OPTIMIZED CONFORMAL WEAVE HEADER GEOMETRY**

(30) Priority: 10.12.2024 US 202418975146
(71) Applicant: Hamilton Sundstrand Corporation, Charlotte, NC 28217-4578 (US)
(72) Inventor: CHENARD, Mary J., Enfield, CT 06082 (US); LE, Tung, Enfield, CT 05086 (US); SMITH, Steven, De Soto, IA 50069 (US); IZARRA GARCIA, Rafael Alexander, Simsbury, CT 06092 (US); NGATU, Grum T., South Windsor, CT 06074 (US)
(74) Representative: Dehns

(57) **Abstract**

A heat exchanger header includes a first end (103) including a port (115) configured to receive a first fluid flowing in a first direction. The heat exchanger header includes a second end (120) configured to output the first fluid in the first direction. A length of the heat exchanger header in a second direction different from the first direction decreases from a longest portion of the heat exchanger header to the first end (103) and from the longest portion of the heat exchanger header to the second end (120). The heat exchanger header is absent internal supports.

## Description

### BACKGROUND

The present disclosure relates to heat exchanger headers, and, in particular, to a stress optimized conformal weave header geometry, and in particular, to a stress optimized conformal weave header manufacturable through additive manufacturing.

Some approaches for manufacturing heat exchangers may include additively manufacturing heat exchangers. Improved approaches for providing additively manufactured heat exchangers are desired.

### BRIEF DESCRIPTION

Example embodiments of the present disclosure are directed to a heat exchanger header including: a first end including a port configured to receive a first fluid flowing in a first direction; and a second end configured to output the first fluid in the first direction; wherein: a length of the heat exchanger header in a second direction different from the first direction decreases from a longest portion of the heat exchanger header to the first end and from the longest portion of the heat exchanger header to the second end; and the heat exchanger header is absent internal supports.

In any one or combination of the embodiments disclosed herein, the heat exchanger header further includes one or more openings extending in the second direction, wherein the one or more openings are configured to receive a second fluid flowing in the second direction.

In any one or combination of the embodiments disclosed herein, the heat exchanger header further includes: one or more second openings extending in the first direction; and one or more channels corresponding to the one or more second openings and extending in the first direction, wherein the one or more second openings and the one or more channels are configured to receive at least a portion of the first fluid.

In any one or combination of the embodiments disclosed herein, the heat exchanger header further includes: one or more channels extending in the second direction; and one or more second channels extending in the second direction and the first direction, wherein one or more second channels are configured to fluidly couple the one or more openings to the one or more channels.

In any one or combination of the embodiments disclosed herein: the first fluid is of a first temperature; and the second fluid is of a second temperature different from the first temperature.

In any one or combination of the embodiments disclosed herein, each of the one or more openings includes a circular shaped opening, an elliptical shaped opening, an oval shaped opening, or a polygonal shaped opening.

In any one or combination of the embodiments disclosed herein, each of the one or more openings includes tapered inner edges.

In any one or combination of the embodiments disclosed herein: the one or more openings extend in the first direction, and a length of each of the one or more openings in a third direction substantially perpendicular to the first direction and the second direction increases and then decreases in the first direction, away from the first end.

In any one or combination of the embodiments disclosed herein, the heat exchanger header further includes a plurality of holes at the second end.

In any one or combination of the embodiments disclosed herein, at least one of: a top surface of the second end includes a flat surface substantially parallel to the first direction; and a bottom surface of the second end includes a flat surface substantially parallel to the first direction, wherein the bottom surface is associated with a start of an additive manufacturing build direction with respect to manufacturing the heat exchanger header.

In any one or combination of the embodiments disclosed herein, the heat exchanger header further includes at least one of: a first flat portion extending toward the first end from a top portion of the second end, in a direction crossing the first direction and the second direction; and a second flat portion extending toward the first end from a bottom portion of the second end, in a direction crossing the first direction and the second direction.

In any one or combination of the embodiments disclosed herein, the heat exchanger header is fabricated through additive manufacturing in a direction substantially parallel to the second direction.

In any one or combination of the embodiments disclosed herein, the second end is fluidly couplable to a heat exchanger core.

In any one or combination of the embodiments disclosed herein: at least a portion of the heat exchanger header includes a prolate spheroid shape, and the longest portion of the heat exchanger header in the second direction corresponds to a long axis of the prolate spheroid shape.

Example embodiments of the present disclosure are directed to a heat exchanger including: a heat exchanger header including: a first end including a port configured to receive a first fluid flowing in a first direction; and a second end configured to output the first fluid in the first direction; wherein: a length of the heat exchanger header in a second direction different from the first direction decreases from a longest portion of the heat exchanger header to the first end and from the longest portion of the heat exchanger header to the second end; and the heat exchanger header is absent internal supports.

In any one or combination of the embodiments disclosed herein, the heat exchanger further includes: a heat exchanger core in fluid communication with the heat exchanger header, wherein the heat exchanger header is integrally formed with the heat exchanger core.

In any one or combination of the embodiments disclosed herein, the heat exchanger header further includes one or more openings extending in the second direction, wherein the one or more openings are configured to receive a second fluid flowing in the second direction.

In any one or combination of the embodiments disclosed herein, the heat exchanger header further includes a plurality of holes at the second end.

In any one or combination of the embodiments disclosed herein, at least one of: a top surface of the second end includes a flat surface substantially parallel to the first direction; and a bottom surface of the second end includes a flat surface substantially parallel to the first direction, wherein the bottom surface is associated with a start of a manufacturing build direction with respect to manufacturing the heat exchanger header.

Example embodiments of the present disclosure are directed to a method of manufacturing a heat exchanger header, the method including: performing manufacturing of the heat exchanger header in accordance with a manufacturing build direction, wherein the heat exchanger header includes: a first end including a port configured to receive a first fluid flowing in a first direction; a second end configured to output the first fluid in the first direction; and one or more openings extending in the second direction, wherein the one or more openings are configured to receive a second fluid flowing in the second direction, wherein performing the manufacturing includes: forming the one or more openings based on a target performance or manufacturability associated with the heat exchanger header; and forming the heat exchanger header without forming internal supports in the heat exchanger header.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 illustrates a side view of a header and a header-to-core interface in a no flow direction in accordance with one or more embodiments of the present disclosure.
FIG. 2 illustrates a cross sectional view of the inside of the header of FIG. 1 in accordance with one or more embodiments of the present disclosure, in which no internal supports are present.
FIG. 3 illustrates a side view of the header of FIG. 1 in the hot flow direction, in accordance with one or more embodiments of the present disclosure.
FIG. 4 illustrates a side view of a header and header-to-core interface in a no flow direction in accordance with one or more embodiments of the present disclosure.
FIG. 5 illustrates a side view of the header of FIG. 4 in the hot flow direction, in accordance with one or more embodiments of the present disclosure.
FIG. 6A illustrates a side view of a header in the hot flow direction, implemented according to a tapered approach, in accordance with one or more embodiments of the present disclosure.
FIG. 6B illustrates a side view of the header of FIG. 6A and header-to-core interface in a no flow direction, in accordance with one or more embodiments of the present disclosure.
FIG. 7A illustrates a side view of a header and circular openings of the header in a no flow height direction, in accordance with one or more embodiments of the present disclosure. FIG. 7B illustrates an inside view of the header and circular openings of the header of FIG. 7A, in accordance with one or more embodiments of the present disclosure. FIG. 7C illustrates an inside view of the header and circular openings of the header of FIG. 7A, in accordance with one or more embodiments of the present disclosure.
FIG. 8 illustrates a side view of a header and elliptical openings of the header in a no flow height direction, in accordance with one or more embodiments of the present disclosure.
FIG. 9 illustrates a cross sectional view of the inside of a header in accordance with one or more embodiments of the present disclosure, in which openings are present.

### DETAILED DESCRIPTION

A detailed description of one or more embodiments of the disclosed apparatus and method are presented herein by way of exemplification and not limitation with reference to the Figures.

Some header configurations for additively manufactured heat exchangers may include internal supports that support the header geometry during build. For example, in some approaches, the geometry for providing structural capability may not be ideal for build orientation. Internal supports, however, can create stress concentrations when exposed to thermal environment. Internal supports may also increase complexity associated with post processing units after build (e.g., with respect to removing powder from inside the header and core).

Some full radius headers are rigid and do not enable sufficient compliance and flexibility for reducing thermal stresses. Such headers may have sides which are restricted or held rigidly by the core to which the headers are coupled, which may prevent the headers from growing thermally and thus result in high stresses, particularly in the header-to-core interface areas. Such high stress areas can reduce/limit overall low-cycle fatigue (LCF) and transient life (e.g., of accumulated cycles) and increase weight.

In some cases, headers/manifolds for both additively manufactured and conventional plate-fin heat exchangers (HXs) may be full radius headers that have the same or similar width and length as the dimensions of the core which the headers/manifolds will interface with. In some cases, the headers/manifolds in turn may be attached (e.g., welded) around the outside perimeter to the heat exchanger core. At the attachment areas with the core, such headers/manifolds are inherently relatively rigid and do not provide an optimal configuration with respect to thermal stresses. This may be especially critical for operating environments involving newer gas turbine engines which can experience higher temperatures due to the higher overall compression ratios targeted for efficiency. In some cases, such headers are welded to the external core surfaces without any gaps or non-uniform geometry.

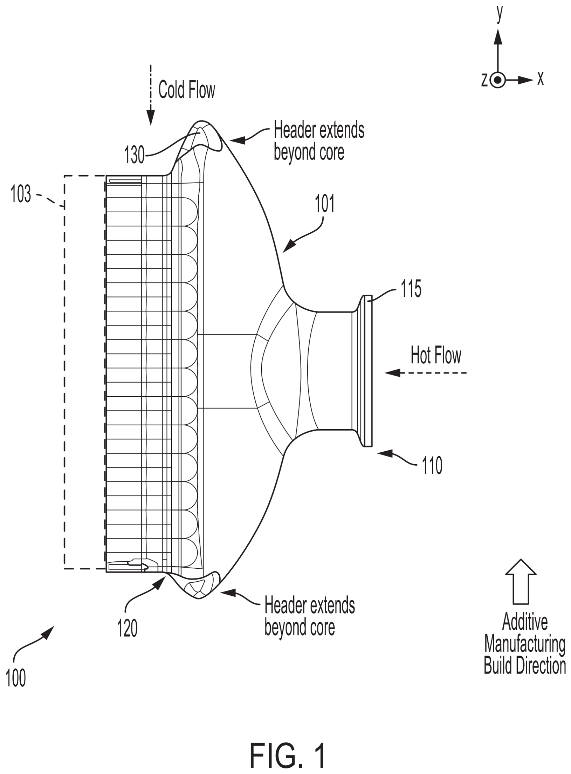

Example aspects of a heat exchanger 100, a heat exchanger header 101 included in the heat exchanger 100, and various example embodiments of the heat exchanger header 101 supported by aspects of the present disclosure are described herein with reference to FIGS. 1 through 9.

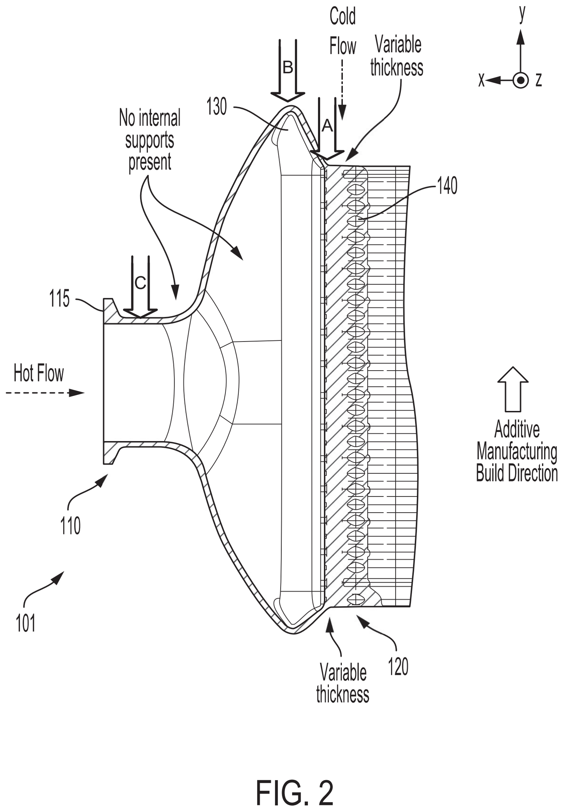

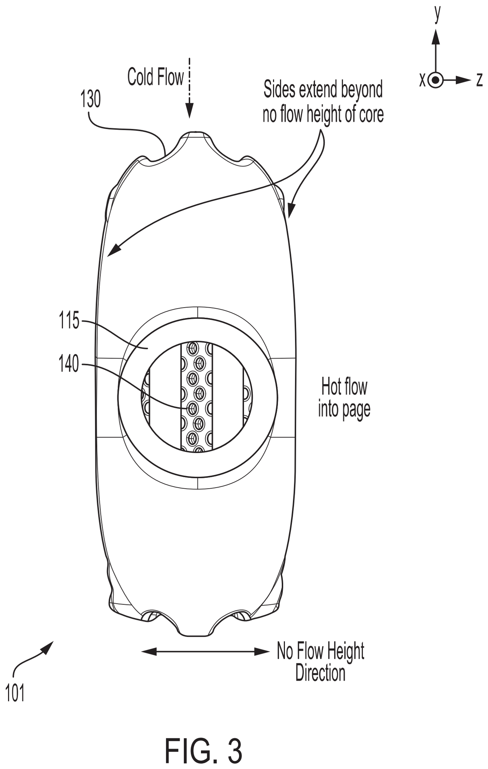

FIG. 1 illustrates a side view of a header and a header-to-core interface in a no flow direction in accordance with one or more embodiments of the present disclosure. FIG. 2 illustrates a cross sectional view of the inside of the header of FIG. 1 in accordance with one or more embodiments of the present disclosure, in which no internal supports are present. FIG. 3 illustrates a side view of the header of FIG. 1 in the hot flow direction, in accordance with one or more embodiments of the present disclosure.

In accordance with one or more embodiments of the present disclosure, the heat exchanger header 101 is manufacturable through additive manufacturing and fluidly couplable to a heat exchanger core 103. For brevity, aspects of the heat exchanger core 103 are not illustrated.

With reference to FIGS. 1 through 3, the heat exchanger header 101 may include a first end 110 including a port 115 configured to receive a first fluid flowing in a first direction (e.g., x-direction, hot flow direction). The heat exchanger header 101 may include a second end 120 configured to output the first fluid (e.g., reduced in temperature) in the first direction and/or receive a second fluid flowing in a second direction (e.g., y-direction). In the example view illustrated at FIGS. 1 through 3, the first fluid may flow in the first direction (e.g., x-direction).

In some aspects, the second end 120 is fluidly couplable to a heat exchanger core 103 (e.g., a weave core) included in the heat exchanger 100. In some embodiments, the heat exchanger header 101 (e.g., at the second end 120) is integrally formed with the heat exchanger core 103. In some embodiments, the heat exchanger header 101 may be built integrally (e.g., using additive manufacturing) with the heat exchanger core 103, which may eliminate welding in association with manufacturing the heat exchanger 100. In some other embodiments, the heat exchanger header 101 may not be built integrally with the heat exchanger core 103. For example, in some other embodiments, the heat exchanger header 101 may be built together with the heat exchanger core 103 using non-additive manufacturing techniques.

In some aspects, embodiments of the present disclosure support varying a length (also referred to herein as thickness) of the heat exchanger header 101 in the second direction (e.g., y-direction, cold flow direction). For example, the length of the heat exchanger header 101 in the second direction (e.g., y-direction, cold flow direction) may decrease from a relatively longest section to the first end 110 and from the relatively longest section to the second end 120. Accordingly, for example, with reference to at least FIG. 1 (and later illustrated at other figures), the length (thickness) of the heat exchanger header 101 may be variable. For example, the heat exchanger header 101 may be relatively shorter (thinner) (e.g., in the y-direction) at a point where the heat exchanger header 101 connects to the heat exchanger core 103 and longer (thicker) (e.g., in the y-direction) further away from the heat exchanger core 103.

In some aspects, the heat exchanger header 101 may have a first thickness (e.g., in the y-direction, at arrow A) at the heat exchanger core 103, a second thickness at a peak (e.g., in the y-direction, at arrow B) of the prolate spheroid shape of the heat exchanger header 101, and a third thickness (e.g., in the y-direction, at arrow C) at the first end 110, in which the second thickness (at arrow B) is the largest thickness, the third thickness (at arrow C) is the smallest thickness, and the first thickness (at arrow A) is smaller than the second thickness but greater than the third thickness.

In some aspects, material thickness along the profile of the heat exchanger header 101 may be relatively smaller adjacent to the heat exchanger core 103, and the material thickness may be relatively greater away from the heat exchanger core 103. For example, the heat exchanger header 101 may have a relatively smallest material thickness along the profile of the heat exchanger header 101 at the heat exchanger core 103 (e.g., at or adjacent arrow A), and the heat exchanger header 101 may have a relatively largest material thickness along the profile of the heat exchanger header 101 at the first end 110 (e.g., at or adjacent arrow C).

Although in the examples described herein, the first direction (e.g., x-direction) is associated with a hot flow, embodiments of the present disclosure are not limited thereto. For example, in some other embodiments, the first direction (e.g., x-direction) may be associated with a cold flow, and the second direction (e.g., y-direction) may be associated with a hot flow.

The heat exchanger header 101 may include one or more openings 130 extending in the second direction. The one or more openings 130 may be configured to receive a second fluid flowing in the second direction. The first fluid may be of a first temperature, and the second fluid may be of a second temperature different from the first temperature.

In some examples, the first fluid is of a first temperature (e.g., a relatively hot fluid, for example, air or liquid), and the second fluid is of a second temperature lower than the first temperature (e.g., a relatively cold fluid, for example, air or liquid). Embodiments of the present disclosure are not limited thereto. In another example, the first fluid may be of a first temperature (e.g., a relatively cold fluid, for example, air or liquid), and the second fluid may be of a second temperature higher than the first temperature (e.g., a relatively hot fluid, for example, air or liquid).

In one or more alternative and/or additional embodiments, (not illustrated), the one or more openings 130 included in the heat exchanger header 101 may extend in a third direction (e.g., z-direction) substantially perpendicular to the first direction and the second direction.

As described herein, the heat exchanger header 101 may extend beyond the heat exchanger core 103 outline in both length and width (e.g., cold flow direction and no flow direction) adjacent to the heat exchanger core 103, thereby having an elongated shape. For example, a portion of the heat exchanger header 101 may be prolate spheroid shaped (e.g., football shaped) where the top portion and the bottom portion (with respect to the additive manufacturing build direction) of the heat exchanger header 101 peak in such a way that the top and bottom portions are adequately supported during the additive build. Expressed another way, at least a portion of the heat exchanger header 101 may include a prolate spheroid shape, and a long axis of the prolate spheroid shape in the second direction (e.g., y-direction) may correspond to a longest portion of the heat exchanger header 101 in the second direction.

Accordingly, for example, the shape of the heat exchanger header 101 enables self-supporting of the heat exchanger header 101, such that the heat exchanger header 101 may be implemented and manufactured (e.g., using additive manufacturing) without the use of any internal supports. Expressed another way, the heat exchanger header 101 is self-supporting and elongated and may be absent internal supports.

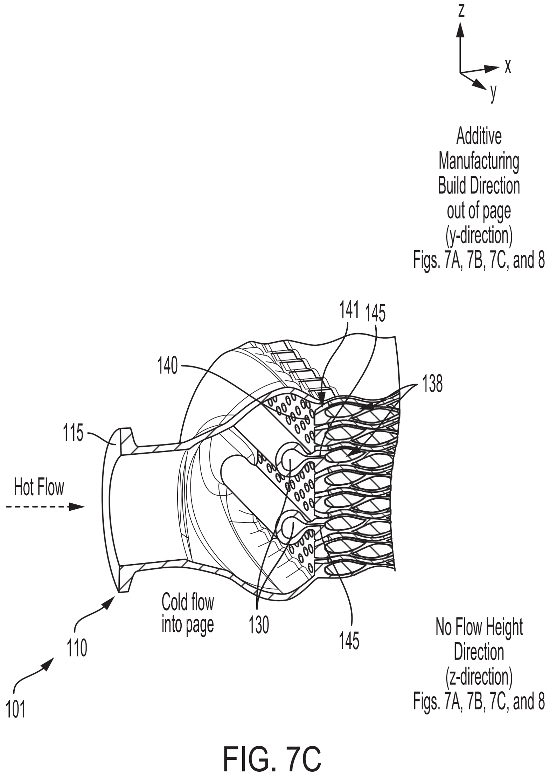

In some embodiments, with reference to FIG. 2 (and later illustrated at other figures), the heat exchanger header 101 may include a plurality of holes 140 at the second end 120. As later illustrated herein, for example, at FIG. 7C, the plurality of holes 140 are configured for the first fluid of a first temperature (e.g., a relatively hot fluid), such that the first fluid does not mix with the second fluid (e.g., a relatively cold fluid) associated with the second end 120.

In some embodiments, as illustrated at FIG. 3, sides of the heat exchanger header 101 along the cold flow direction may extend beyond the no flow width of the heat exchanger core 103.

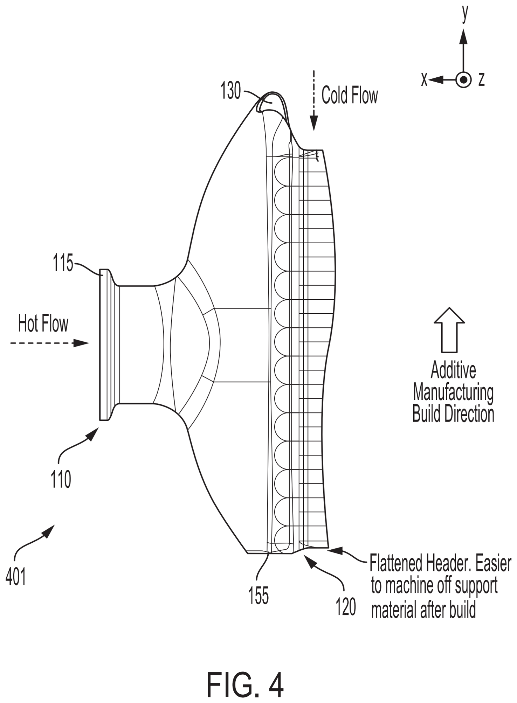

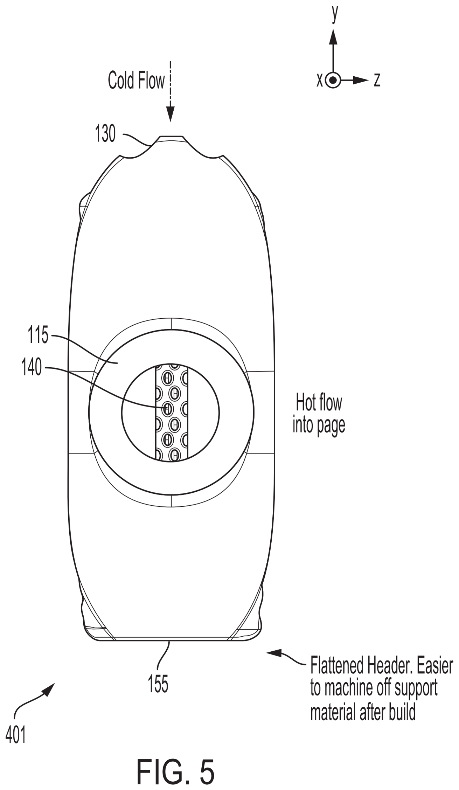

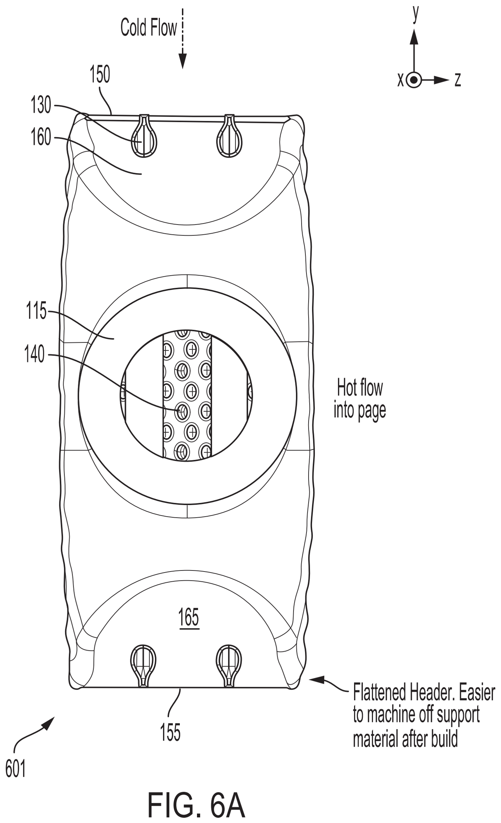

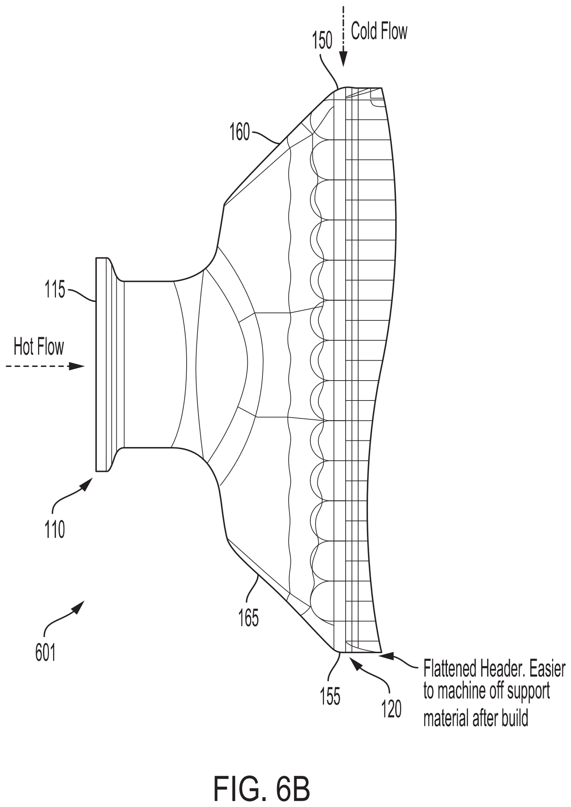

FIG. 4 illustrates a side view of a header and header-to-core interface in a no flow direction in accordance with one or more embodiments of the present disclosure. FIG. 5 illustrates a side view of the header of FIG. 4 in the hot flow direction, in accordance with one or more embodiments of the present disclosure. FIGS. 6A illustrates a side view of a header in the hot flow direction, implemented according to a tapered approach, in accordance with one or more embodiments of the present disclosure. FIG. 6B illustrates a side view of the header of FIG. 6A and header-to-core interface in a no flow direction, in accordance with one or more embodiments of the present disclosure.

A heat exchanger header 401 described with reference to FIGS. 4 and 5, and a heat exchanger header 601 described with reference to FIGS. 6A and 6B, may include aspects of the heat exchanger header 101 described herein, and repeated descriptions of like elements are omitted for brevity.

As will be described herein with reference to FIGS. 4 through 6B, embodiments of the present disclosure support adjusting the design of the heat exchanger header 401 in association with minimizing the elongation on some sides based on structural, envelope, build, or performance targets. For example, with reference to FIGS. 4 through 6B, some adjustments are described in which sides of the heat exchanger header 401 (or heat exchanger header 601) are flattened to support either additive build or structural targets. The flattening of some areas of the heat exchanger header 401 (or heat exchanger header 601) may support improved additive manufacturing post processing.

In an example, with reference to FIGS. 4 and 5, a bottom surface 155 of the second end 120 may include a flat surface substantially parallel to the first direction, wherein the bottom surface 155 is associated with a start of an additive manufacturing build direction with respect to manufacturing the heat exchanger header 401.

In another example, with reference to FIGS. 6A and 6B, a top surface 150 of the second end 120 may include a flat surface substantially parallel to the first direction, and the bottom surface 155 of the second end 120 may include a flat surface substantially parallel to the first direction.

Further with reference to FIGS. 6A and 6B, in some embodiments, the heat exchanger header 601 may include a first flat portion 160 extending toward the first end 110 from a top portion of the second end 120, in a direction crossing the first direction and the second direction. Additionally, or alternatively, the heat exchanger header 601 may include a second flat portion 165 extending toward the first end 110 from a bottom portion of the second end 120, in a direction crossing the first direction and the second direction.

In the examples described herein, the additive manufacturing build direction for manufacturing a heat exchanger header (e.g., heat exchanger header 101, heat exchanger header 401, heat exchanger header 601) is perpendicular the first direction (e.g., x-direction) and parallel the second direction (e.g., y-direction) . That is, for example, embodiments of the present disclosure include manufacturing the heat exchanger header through additive manufacturing in a direction substantially parallel to the second direction.

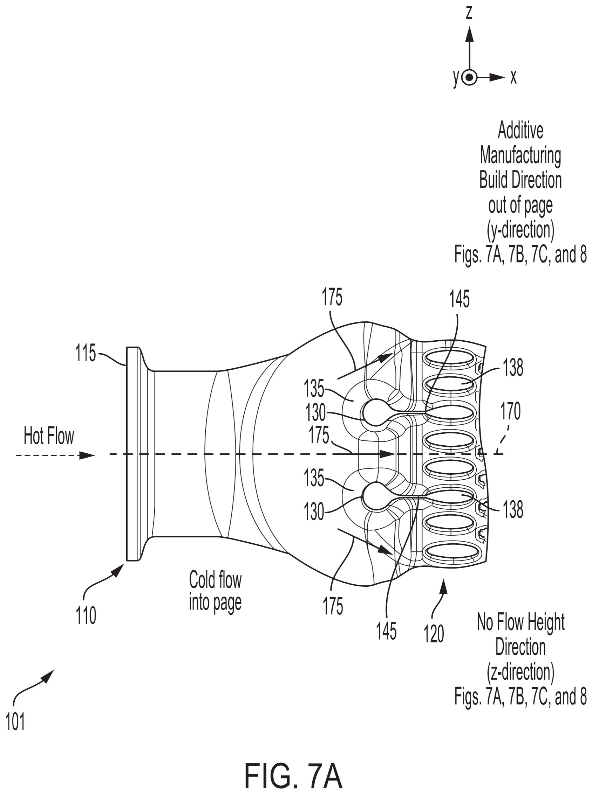

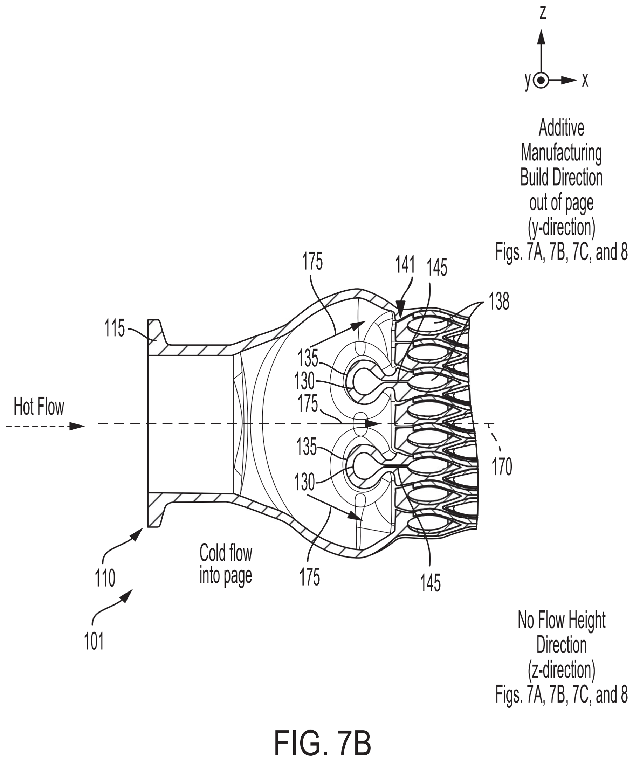

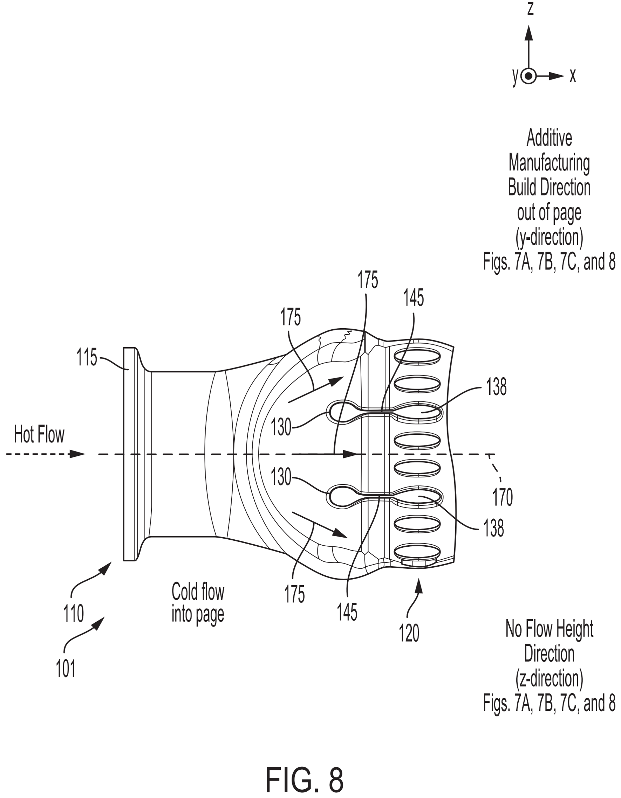

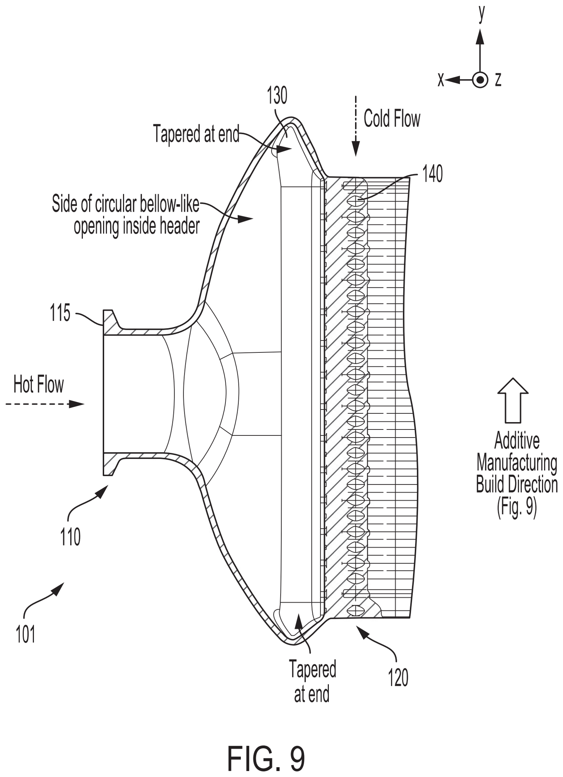

FIG. 7A illustrates a side view of a header and circular openings of the header in a no flow height direction, in accordance with one or more embodiments of the present disclosure. FIG. 7B illustrates an inside view of the header and circular openings of the header of FIG. 7A, in accordance with one or more embodiments of the present disclosure. FIG. 7C illustrates an inside view of the header and circular openings of the header of FIG. 7A, in accordance with one or more embodiments of the present disclosure. FIG. 8 illustrates a side view of a header and elliptical openings of the header in a no flow height direction, in accordance with one or more embodiments of the present disclosure. FIG. 9 illustrates a cross sectional view of the inside of a header in accordance with one or more embodiments of the present disclosure, in which openings are present.

Aspects of the heat exchanger header 101 described with reference to FIGS. 7 through 9 may include aspects of the heat exchanger header 401 or the heat exchanger header 601 described herein, and repeated descriptions of like elements are omitted for brevity.

As will be described with reference to FIGS. 7 through 9, the heat exchanger header 101 may include one or more openings 130 (bellow-like openings). In some aspects, the openings 130 (one or more) may resemble bellows which extend along the width of the heat exchanger header 101 (in the cold flow direction). That is, for example, the openings 130 may follow the cold flow length of the heat exchanger header 101. Although the examples illustrated at FIGS. 7 and 8 illustrate two openings 130, it is to be understood that embodiments of the present disclosure support implementations in which the heat exchanger header 101 includes a single opening 130 or more than two openings 130.

In some embodiments, the openings 130 may extend from one (or more) of the cold channels 138, narrow at the interface area between the heat exchanger header 101 and the heat exchanger core 103, and then expanding out within the heat exchanger header 101.

In some embodiments, the openings 130 may be circular, elliptical, or another shape supportive of features of the heat exchanger header 101 as described herein. For example, each the openings 130 may be a circular shaped opening, an elliptical shaped opening, an oval shaped opening, or a polygonal shaped opening.

In some embodiments, the openings 130 may be tapered or straight at the ends. For example, one or more of the openings 130 may include tapered inner edges 135 (e.g., as illustrated at FIG. 7). Additionally, or alternatively, one or more of the openings 130 may not be tapered at the ends (e.g., as illustrated at FIG. 8).

In some embodiments, with reference to FIGS. 7 and 8, the openings 130 may extend in the first direction, and a length of each of the openings 130 in the third direction (e.g., z-direction) may increase and then decrease in the first direction, away from the first end 110. For example, in some embodiments, each of the openings 130 may be elliptical shaped. However, embodiments of the present disclosure are not limited thereto, and in some examples, each of the openings 130 may be circular shaped or another shape supportive of features of the heat exchanger header 101.

For implementations including multiple openings 130, the openings 130 may be spaced equally from the center of the heat exchanger header 101 / center of the heat exchanger core 103. For example, with reference to FIGS. 7 and 8, the openings 130 may be equidistant from a centerline 170 of the heat exchanger header 101 (which may correspond to a centerline of the heat exchanger core 103) such that the openings 130 are spaced apart according to a predetermined distance. For example, the openings 130 may be spaced apart according to the predetermined distance such that the distance between the openings 130 and the formation of the openings 130 satisfies a target structural integrity or target performance of the heat exchanger header 101.

Placement of the openings 130 is not limited to the examples described herein. The heat exchanger header 101 may include openings 130 of any suitable quantity supportive of a target structural integrity, target functionality, or target performance of the heat exchanger header 101 (e.g., flow distribution through the header, shape in conformance to the flow, target aerodynamics, target manufacturability parameters).

In some embodiments, the heat exchanger header 101 may include one or more openings 130 on a side, top, and/or bottom of the heat exchanger header 101.

With reference to FIGS. 7A through 7C and FIG. 8, based on each opening 130, fluid channels 175 of the heat exchanger header 101 are formed.

As described herein, a heat exchanger header (e.g., heat exchanger header 101, heat exchanger header 401, heat exchanger header 601) is provided which includes features not implemented in some other approaches. For example, the heat exchanger header may be implemented without internal supports, and the heat exchanger header has thermal stresses satisfying a criteria (e.g., thermal stresses that are low enough) to provide for an additively manufactured heat exchanger with a low-cycle fatigue (LCF) suitable for use in actual engine environment or comparable high temperature environment. For example, for a heat exchanger header (e.g., heat exchanger header 101, heat exchanger header 401, heat exchanger header 601) and heat exchanger (e.g., heat exchanger 100) described herein manufactured through additive manufacturing, the heat exchanger header and heat exchanger may be robust against stress levels associated with an actual engine environment or comparable high temperature environment.

Some other headers may generally be full radius and rounded in shape with edges that do not exceed the core outline. In contrast, instead of a simple radius, the heat exchanger header in accordance with one or more embodiments of the present disclosure may be elongated (e.g., "football" like) and extend beyond the core edges in the cold flow direction.

The openings 130 (bellow-like openings) described herein create additional curved surfaces inside the heat exchanger header, whereas other headers are absent or are unable to implement such a level of complexity.

Relatively small hot channels 141 (e.g., in fluid communication with holes 140) are included in the heat exchanger header 101, making the header-to-core interface unique. Relatively small cold channels 145 (e.g., in fluid communication with openings 130) fluidly couple cold channels 138 in the heat exchanger core 103 to the openings 130 in the heat exchanger header 101, making the header-to-core interface unique.

The openings 130 (bellow-like openings) described herein make the heat exchanger header structurally compliant and support thermal flexing, expansion, and contraction (e.g., for use in actual engine environment or comparable high temperature environment), without reducing fatigue life of the more openings or requiring additional material/support.

As described herein, a heat exchanger header (e.g., heat exchanger header 101, heat exchanger header 401, heat exchanger header 601) is provided which includes other features not implemented in some other approaches. For example, existing additive manufacturing header technology is incapable of yielding an optimized part. The current technology fails to provide headers having a geometry that provides sufficient flexibility thermally to reduce thermal-based stresses, particularly in high temperature, quick transient environments. Therefore, such other technologies are unable to provide a heat exchanger header which achieves structural compliance while minimizing impacts to additive buildability and performance.

Aspects of a heat exchanger header (e.g., heat exchanger header 101, heat exchanger header 401, heat exchanger header 601) described herein and the techniques described herein provide improved flexibility in shape (extending beyond core footprint and compliance along core width or no flow height through bellow-like openings) and thickness (allowing variable thickness) in support of minimizing transient thermal stresses and minimizing increases in fatigue (structurally conformal).

Aspects of a heat exchanger header (e.g., heat exchanger header 101, heat exchanger header 401, heat exchanger header 601) described herein and the techniques described herein support a reduction in weight and a reduction in additive manufacturing build time and material compared to other approaches (e.g., compared to headers that require internal supports).

Aspects a heat exchanger header (e.g., heat exchanger header 101, heat exchanger header 401, heat exchanger header 601) described herein and the techniques described herein support minimizing additive manufacturing post processing after build (e.g., by reducing the amount of machining time for removing support material). In another example, the openings 130 described herein may span along the entire length of a given heat exchanger header (e.g., in cold flow direction, parallel with build direction), and the structural characteristics of the openings may reduce or eliminate the dependence on unique post-processing requirements or extra support material associated with manufacturing the heat exchanger header.

The openings 130 may be formed or designed such that the openings 130 minimize impacts to performance (e.g., flow recirculation and flow distribution in a heat exchanger header described herein) by allowing flexibility in opening shape while maintaining structural compliance. Further, for example, using narrow channels (e.g., cold channels 145) between cold channels of the heat exchanger core 103 and the openings 130 in the heat exchanger header minimize impacts to performance (e.g., flow recirculation and flow distribution in the heat exchanger header) while maintaining structural compliance.

Aspects of a heat exchanger header (e.g., heat exchanger header 101, heat exchanger header 401, heat exchanger header 601) described herein and the techniques described herein provide a simplified build geometry and support additive manufacturing of a heat exchanger header. Aspects of a heat exchanger header (e.g., heat exchanger header 101, heat exchanger header 401, heat exchanger header 601) described herein and the techniques described herein may eliminate the reliance on internal supports inside a header, which reduces complexity associated with powder removal in laser sintering additive manufacturing. Aspects of a heat exchanger header (e.g., heat exchanger header 101, heat exchanger header 401, heat exchanger header 601) described herein and the techniques described herein provide a reduction in weight compared to headers implemented with internal supports.

In accordance with one or more embodiments of the present disclosure, a heat exchanger header (e.g., heat exchanger header 101, heat exchanger header 401, heat exchanger header 601) is provided which may be implemented without specific or unique post processing in build orientation (e.g., in view of at least FIG. 9).

In accordance with one or more embodiments of the present disclosure, a heat exchanger header (e.g., heat exchanger header 101, heat exchanger header 401, heat exchanger header 601) and the techniques described herein may support simplified removal (machining) of extra support material around a top or bottom of the heat exchanger header (e.g., as described with reference to at least FIGS. 4 and 5). Further, with reference to at least FIGS. 4 and 5, aspects of the heat exchanger header can be tailored to add flat surfaces that reduce build support material removal.

The techniques described herein provide a heat exchanger header (e.g., heat exchanger header 101, heat exchanger header 401, heat exchanger header 601) integrally formed with the heat exchanger core 103, such that the heat exchanger header and heat exchanger core 103 are manufactured as a single piece, eliminating welds (e.g., header to core weld). Aspects of the heat exchanger header described herein and the techniques described herein may reduce manufacturing risk and complexity.

A heat exchanger header (e.g., heat exchanger header 101, heat exchanger header 401, heat exchanger header 601) described herein is flexible and structurally compliant, which reduces transient thermal based stresses particularly at header to core interface and increases fatigue life over other header designs.

The term "substantially," as used herein, means approximately or actually. The term "substantially equal" means approximately or actually equal. The term "substantially the same" means approximately or actually the same. The term "substantially perpendicular" means approximately or actually perpendicular. The term "substantially parallel" means approximately or actually parallel.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the appended claims. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

The corresponding structures, materials, acts and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope and spirit of the disclosure. The embodiments were chosen and described in order to best explain the principles of the disclosure and the practical application and to enable others of ordinary skill in the art to understand the disclosure for various embodiments with various modifications as are suited to the particular use contemplated.

While the various embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. A heat exchanger header comprising:
a first end (103) comprising a port (115) configured to receive a first fluid flowing in a first direction; and
a second end (120) configured to output the first fluid in the first direction;
wherein:
a length of the heat exchanger header in a second direction different from the first direction decreases from a longest portion of the heat exchanger header to the first end (103) and from the longest portion of the heat exchanger header to the second end (120); and
the heat exchanger header is absent internal supports.

2. The heat exchanger header of claim 1, further comprising one or more openings (130) extending in the second direction, wherein the one or more openings (130) are configured to receive a second fluid flowing in the second direction.

3. The heat exchanger header of claim 2, further comprising:
one or more second openings extending in the first direction; and
one or more channels (175) corresponding to the one or more second openings and extending in the first direction,
wherein the one or more second openings and the one or more channels (175) are configured to receive at least a portion of the first fluid.

4. The heat exchanger header of claim 2 or 3, further comprising:
one or more channels (175) extending in the second direction; and
one or more second channels extending in the second direction and the first direction, wherein one or more second channels are configured to fluidly couple the one or more openings (130) to the one or more channels (175).

5. The heat exchanger header of any of claims 2-4, wherein:
the first fluid is of a first temperature; and
the second fluid is of a second temperature different from the first temperature.

6. The heat exchanger header of any of claims 2-5, wherein each of the one or more openings (130) comprises a circular shaped opening, an elliptical shaped opening, an oval shaped opening, or a polygonal shaped opening; and/or wherein each of the one or more openings (130) comprises tapered inner edges; and/or wherein:
the one or more openings (130) extend in the first direction, and
a length of each of the one or more openings (130) in a third direction substantially perpendicular to the first direction and the second direction increases and then decreases in the first direction, away from the first end (103).

7. The heat exchanger header of any preceding claim, further comprising a plurality of holes at the second end (120).

8. The heat exchanger header of any preceding claim, wherein at least one of:
a top surface (150) of the second end (120) comprises a flat surface substantially parallel to the first direction; and
a bottom surface (155) of the second end (120) comprises a flat surface substantially parallel to the first direction, wherein the bottom surface (155) is associated with a start of an additive manufacturing build direction with respect to manufacturing the heat exchanger header.

9. The heat exchanger header of any preceding claim, further comprising at least one of:
a first flat portion (160) extending toward the first end (103) from a top portion of the second end (120), in a direction crossing the first direction and the second direction; and
a second flat portion (165) extending toward the first end (103) from a bottom portion of the second end (120), in a direction crossing the first direction and the second direction.

10. The heat exchanger header of any preceding claim, wherein the heat exchanger header is fabricated through additive manufacturing in a direction substantially parallel to the second direction.

11. The heat exchanger header of any preceding claim, wherein the second end (120) is fluidly couplable to a heat exchanger core (103).

12. The heat exchanger header of any preceding claim, wherein:
at least a portion of the heat exchanger header comprises a prolate spheroid shape, and
the longest portion of the heat exchanger header in the second direction corresponds to a long axis of the prolate spheroid shape.

13. A heat exchanger comprising:
a heat exchanger header, as claimed in any preceding claim.

14. The heat exchanger of claim 13, further comprising:
a heat exchanger core (103) in fluid communication with the heat exchanger header,
wherein the heat exchanger header is integrally formed with the heat exchanger core (103).

15. A method of manufacturing a heat exchanger header, the method comprising:
performing manufacturing of the heat exchanger header in accordance with a manufacturing build direction,
wherein the heat exchanger header comprises:
a first end (103) comprising a port (115) configured to receive a first fluid flowing in a first direction;
a second end (120) configured to output the first fluid in the first direction; and
one or more openings (130) extending in the second direction, wherein the one or more openings (130) are configured to receive a second fluid flowing in the second direction,
wherein performing the manufacturing comprises:
forming the one or more openings (130) based on a target performance or manufacturability associated with the heat exchanger header; and
forming the heat exchanger header without forming internal supports in the heat exchanger header.
